# EUROPEAN PATENT APPLICATION

(11) **EP 1 468 908 A1**
(43) Date of publication of application: **20.10.2004**
(21) Application number: 04384202.0
(22) Date of filing: 31.03.2004
(51) Int. Cl.: B64C 3/14

(54) **Aerodynamic profile**

(30) Priority: 16.04.2003 ES 200301012
(71) Applicant: Munoz Saiz, Manuel, 04004 Almeria (ES)
(72) Inventor: Munoz Saiz, Manuel, 04004 Almeria (ES)

(57) **Abstract**

Aerodynamic profile that comprises two zones or main sections one is the front surface inclined with a positive angle (1), generating of the totality or greater part of the lift, and the other is the rear portion (2) or zone to the front surface, profiled or streamlined, formed by two curve surfaces (5,6) and generally hollow, which does not generate lift, but leads the air flow properly reducing drag and avoiding that the boundary layer separation takes place.

## Description

FIELD OF THE INVENTION. In all type of vehicles and their external elements such as wings, fuselages, horizontal and vertical stabilizers, engines, etc. of the aircraft.

STATE OF THE PRIOR ART. Existing aerodynamic profiles have a transversal cross-section with a rounded leading edge which is partially elliptical or oval, with the trailing in a very acute dihedral angle, the upper surface being convex and the lower surface substantially flat, and with a relatively low lift/drag ratio. Its operation is such, that they produce lift as a function of the pressure differences generated between the upper and lower surfaces, which are negative on the upper surface and positive on the lower surface.

DESCRIPTION OF THE INVENTION. The aerodynamic profile of the invention consists of two zones or main sections one is the front surface inclined with a positive angle, generating of the totality or greater part of the lift, and the other is the rear portion or zone to the front surface, profiled or streamlined, formed by two curve surfaces and generally hollow, which does not generate lift, but leads the air flow properly reducing drag and avoiding that the boundary layer separation takes place.

It can be considered like an inclined plate whose rear surface is streamlined, taking advantage of its lifting frontal advantage and eliminating the drawback or disadvantages such as drag, boundary layer separation, etc. of the rear zone of the plate.

It produces a great lift with minimum drag to the advance, for that reason it provides a maximum of efficiency or effectiveness.

The slenderer or separation between the two surfaces of the rear portion, will define its efficiency.

The depression in the upper surface does not take place and for that reason the boundary layer separation neither, eliminating the great problems that take place mainly with great angles of attack of the existing wings.

The inclined front surface can be flat, concave or convex.

The nose or leading edge upper zone can be slightly curved.

The nose or leading edge can be rounded, allowing greater angles of attack.

The rear portion can have its lower surface flat, horizontal and rigid, in this case said zone will produce lift due to its downward inclination. It can have also different intermediate inclinations from the later portion between this last inclination and the horizontal.

The periphery of the front surface can display a small flange except in its lower zone, which projects and avoids the slip of the air, and with whose flow is aligned, this is specially useful with profiles arranged longitudinally.

The front surface can be circular, oval or rectangular with its corners rounded and when they are longitudinal elements they can be arranged laterally, vertical or inclined. In all the cases its efficiency is the same.

The rear portion can be rigid and can be total or partially free and rotary and can be driven by means of a ram. It can have flexible walls or it can be formed by two flexible plates which slide between themselves in the trailing edge, in these cases they adapt to the airflow independently of the angle of attack applied.

It is useful for all type of vehicles and their external elements such as wings, fuselages, horizontal and vertical stabilizers, engines, etc. of the aircraft.

Unlike the existing wings the this profile produces great lift with zero angle of attack and without separation of the boundary layer.

In the aircrafts it can be enough with narrow and transversally lenghthened stabilizing wings.

Advantages. It is simple and inexpensive, it eliminates total or partially the wings and great part of their disadvantages, the boundary layer is not separated or it is done with difficulty, it has high efficiency and saves fuel. The lift/drag rate is very great. It allows greater angles of attack of the front surface.

### BRIEF DESCRIPTION OF THE DRAWINGS

Figure 1 shows a schematic and cross-section view of the profile of the invention.
Figure 2 shows a perspective view of a variant of a profile.
Figure 3 shows a schematic and cross-section view of a variant of the profile of the invention.
Figure 4 shows a schematic and cross-section view of a variant of the profile of the invention.
Figure 5 shows a schematic and cross-section view of a variant of the profile of the invention.
Figure 6 shows a schematic front and partial view of a variant of the profile of the invention.
Figure 7 shows a schematic front view of a variant of the profile of the invention.
Figure 8 shows a schematic front and partial view of a variant of the profile of the invention.

### MORE DETAILED DESCRIPTION OF THE INVENTION

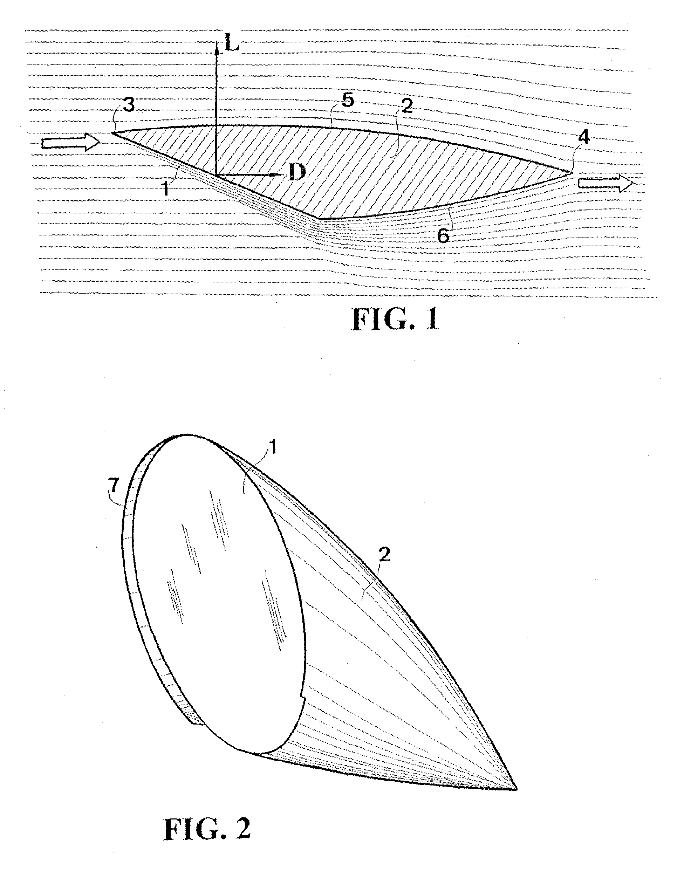

Figure 1 consists of the front surface inclined with a positive angle (1), generating of the totality or greater part of the lift, the rear portion (2) to the front surface, formed by the two surfaces, the upper (5) and the lower (6), profiled or streamlined, formed by two curve surfaces, which does not generate lift, but leads the air flow properly reducing drag and avoiding that the boundary layer separation takes place. The flow and the arrows show the displacement backwards and downwards of the streamlines and as a result the forces generated on the fuselage, where L is the lift and D the drag. The leading edge or nose (3), the trailing edge or tail (4). It is an arrangement with an angle of attack zero.

Figure 2 consists of the front surface curved and inclined of circular cross-section type with a positive angle of attack (1), generating of the totality or greater part of the lift, the rear portion to the front surface (2) in this case of conical form with its generatrices curved and convex and the flange (7).

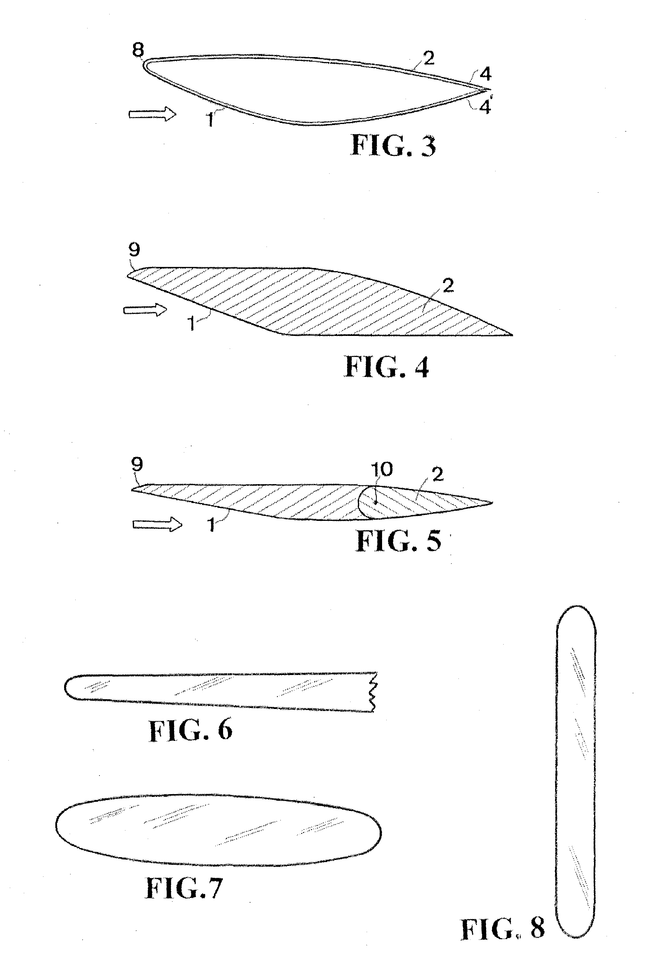

Figure 3 consists of the inclined front surface, curved and with a positive angle (1), the rear portion to the front surface (2) formed by two sliding plates flexible plates which slide between themselves (4 and 4') in the trailing edge and the nose or round leading edge (8).

Figure 4 consists of the inclined front surface (1), the rear portion to the frontal surface (2) and the curve upper zone of the nose or leading edge (9).

Figure 5 consists of the inclined front surface (1), the rear portion to the frontal surface (2) rotary around the axis (10) and the upper zone of the curved leading edge (9).

Figure 6 shows the front zone of a portion of wing of the horizontal type.

Figure 7 shows the front zone of a profile of oval and horizontal type.

Figure 8 shows the front zone of a profile of the rectangular and vertical type with the round corners.

## Claims

1. An aerodynamic profile that comprises two zones or main sections one is the front surface inclined with a positive angle, generating of the totality or greater part of the lift, and the other is the rear portion or zone to the front surface, profiled or streamlined, formed by two surfaces and generally hollow, which does not generate lift, but leads the air flow properly reducing drag and avoiding that the boundary layer separation takes place, having a nose or leading edge and trailing edge or tail.

2. An aerodynamic profile according to claim 1, wherein the rear zone has two curve and convex surfaces.

3. An aerodynamic profile according to claim 1, wherein the rear zone to the front surface has its lower surface flat, horizontal and rigid, and the upper surface curve.

4. An aerodynamic profile according to claim 1, wherein the periphery of the front surface has a small flange, except in its lower zone, which projects and avoids the air slip and with whose flow is aligned.

5. An aerodynamic profile according to claim 1, wherein the rear zone to the front surface is rigid.

6. An aerodynamic profile according to claim 1, wherein the rear zone to the front surface is flexible.

7. An aerodynamic profile according to claim 1, wherein the rear zone to the front surface is formed by two flexible plates which slide between themselves in the trailing edge

8. An aerodynamic profile according to claim 1, wherein the rear zone to the front surface is total or partially free and rotary and is driven by a ram.

9. An aerodynamic profile according to claim 1, wherein the front surface is flat and the upper zone of the nose or leading edge is slightly curve.

10. An aerodynamic profile according to claim 1, wherein the front surface is curve.
